Europäisches Patentamt

European Patent Office

Office européen des brevets

(19)

(11) EP 0 745 839 B1

(12) **EUROPÄISCHE PATENTSCHRIFT**

(45) Veröffentlichungstag und Bekanntmachung des Hinweises auf die Patenterteilung:
**21.04.1999 Patentblatt 1999/16**

(51) Int Cl.⁶: **G01N 21/00**, G01N 21/53

(21) Anmeldenummer: **95108336.9**

(22) Anmeldetag: **31.05.1995**

(54) **Vorrichtung und Verfahren zur Kompensation der Scheibenverschmutzung bei Sichtweitenmessgeräten**

Device and process for compensating window contamination of visibility meters

Dispositif et procédé pour compensation de la salissure des vitres des appareils de mesure de la distance de la visibilité

(84) Benannte Vertragsstaaten:
**CH DE FR GB LI NL**

(43) Veröffentlichungstag der Anmeldung:
**04.12.1996 Patentblatt 1996/49**

(73) Patentinhaber: **JENOPTIK Aktiengesellschaft**
**D-07743 Jena (DE)**

(72) Erfinder: **Heyn, Klaus**
**D-20257 Hamburg (DE)**

(56) Entgegenhaltungen:
**WO-A-94/09356**     **GB-A- 2 186 077**
**US-A- 3 668 674**     **US-A- 3 745 350**
**US-A- 4 432 645**

EP 0 745 839 B1

**Beschreibung**

Die Erfindung betrifft ein Verfahren zur Kompensation der Scheibenverschmutzung bei Sichtweitenmeßgeräten, die insbesondere auf Flugplätzen zum Einsatz kommen. Derartige Geräte bestimmen die Sichtweite nach den Transmissions- oder Reflexionseigenschaften der Atmosphäre. Die Geräte senden und empfangen Lichtimpulse, um aus der Veränderung der Intensität der empfangenen Lichtimpulse im Vergleich zu den ausgesendeten Lichtimpulsen die jeweils längs der Meßstrecke vorhandene Sichtweite abzuleiten. Auch Geräte mit Dauerlicht werden verwendet. Ein ständiges Problem bei derartigen Geräten ist die Verschmutzung der Scheiben, die vor den Sendern beziehungsweise Empfängern angebracht sind. Die Scheibenverschmutzung tritt nicht nur durch atmosphärische Einflüsse wie Regen, Schnee und in der Atmosphäre befindliche Staubteile auf, sondern verstärkt auf Flughäfen durch die von den Flugzeugtriebwerken ausgestoßenen Abgase, die in relativ großem Maße Öl- und Benzinnebel enthalten. Eine zuverlässige Aussage über die Sichtweite ist streng genommen nur bei gereinigten Scheiben möglich. Dies würde häufige Wartungsarbeiten erfordern.

Zur Lösung des Problems ist bereits vorgeschlagen worden, ein Gebläse anzuordnen, das die Ablagerung von Staubteilchen auf den Scheiben möglichst verhindert (DE-PS 24 28 9019). Letztlich ist auch damit eine vollständige Verhinderung der Verschmutzung nicht möglich. Auch die Verwendung von Schutzhauben, Schutzklappen und ähnlichem sind problematisch, weil entweder der Zugang zu den Scheiben im Wartungsfall erschwert wird oder keine ununterbrochene Messung möglich ist. Schließlich sind derartige mechanische Teile im Außenbereich im allgemeinen reparatur- und wartungsintensiv.
Zur Verlängerung der Wartungsintervalle bei Sichtweitenmeßgeräten wird vorgeschlagen, eine Kombination aus wenigstens einem Transmissiometer und einem Streulichtmeßgerät zu verwenden.

Der wesentliche Effekt dieser Kombination liegt darin, daß die atmosphärische Transmission sich bei hohen Sichtweiten beliebig nahe an 100 % annähert. Der rechnerische Zusammenhang ist durch die bekannte Formel nach Koschmider gegeben:

$$MOR = \ln E \times B / \ln T \qquad (1)$$

MOR = meteorological optical range (Sichtweite)
E = Kontrastschwelle (z.B. 0,05)
B = Meßbasislänge (z.B. 50 m)
T = gemessener Transmissionswert [%]

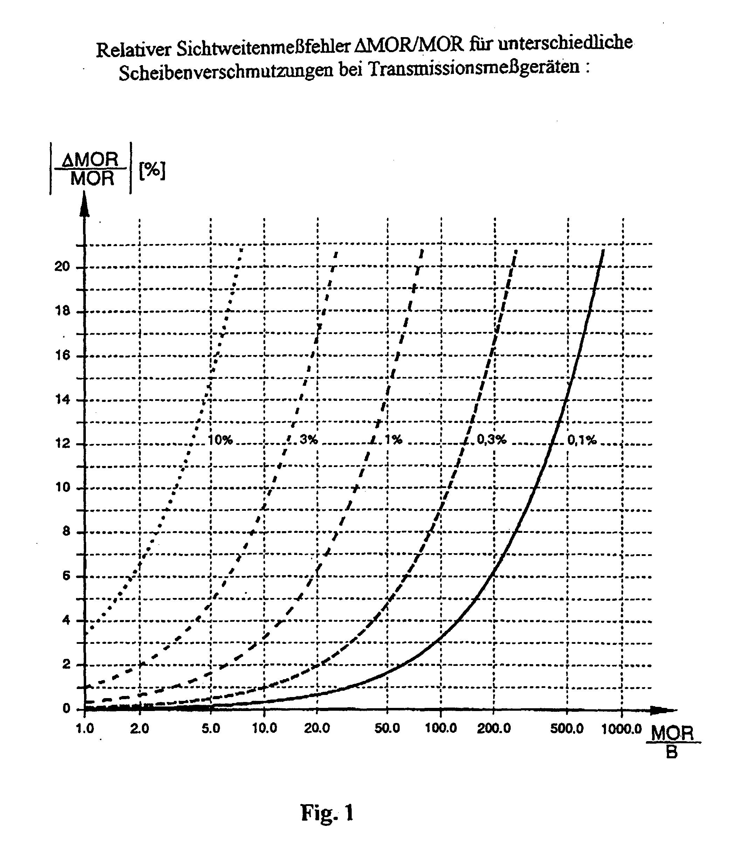

Demzufolge wird für steigende Sichtweiten die dazugehörige Transmissionsänderung immer geringer. Andererseits reduziert eine Verschmutzung der Gerätescheiben den Meßwert für die Transmission um einen absoluten Faktor von z.B. 1 oder 3 % - je nach Verschmutzung. Dies führt besonders bei guter Sicht zu einer dramatischen Reduzierung der Meßgenauigkeit. Figur 1 zeigt den relativen Sichtweitenmeßfehler ΔMOR/ MOR über der auf die Basislänge B normierten Sichtweite MOR für unterschiedlich große absolute Faktoren wie z.B. die Scheibenverschmutzung. Ein Sichtweitenwert MOR = 2500 m würde beispielsweise für eine 50-m-Meßbasislänge bei einem Wert von 50 auf der MOR/B-Achse zu finden sein. Die Figur 1 zeigt für diesen Sichtweitenwert einen relativen Sichtweitenmeßfehler von 5 % schon bei einem absoluten Faktor (Verschmutzung) von nur 0,3 %. Dies zeigt, daß bei guten Sichtweiten die Transmissiometer sehr empfindlich auf eine Verschmutzung reagieren.
Ganz anders liegt die Sache bei Sichtweitenmeßgeräten nach dem Streuprinzip, also insbesondere bei Geräten, die die Vorwärts- oder Rückwärtsstreuung ausnutzen. Dies läßt sich an einer Beispielrechnung auf der Grundlage der Gleichung (1) für ein Transmissiometer mit einem Meßbereichsende von MOR = 2000 m und den bei Gleichung (1) angegebenen Werten zeigen:

$$T = e^{(\ln 0,05 \times 50m/2000m)} = 0,927842 \qquad (2)$$

Wird ein zulässiger MOR-Meßfehler von ± 10 % zugrundegelegt:

$$T_{+10} = e^{(\ln 0,05 \times 50m/2200m)} = 0,934181$$

$$T_{-10} = e^{(\ln 0,05 \times 50m/1800m)} = 0,920153$$

$$T_{+10} - T = \Delta T_{+10} = + 0,00633875$$

$$T_{-10} - T = \Delta T_{-10} = - 0,00768898$$

Eine Nachkalibrierung bei MOR = 10 km würde bei folgendem Nennwert der Transmission durchgeführt:

$$T = e^{(\ln 0,05 \times 50m/10000m)} = 0,985133 \qquad (3)$$

Hierdurch vergrößern sich die zulässigen Abweichungen bei der Transmissionsnachkalibrierung linear:

$$\Delta T_{+} = \Delta T_{+10} \times 0,985133/0,934181 \approx 0,0067$$

$$\Delta T_{-} = \Delta T_{-10} \times 0{,}985133/0{,}920153 \approx 0{,}0082$$

Die Nachkalibrierung für die gemessene Transmission bei MOR = 10 km ergibt die folgenden beiden Grenzwerte:

$$T_{+} = 0{,}985133 + 0{,}0067 = 0{,}991833$$

$$T_{-} = 0{,}985133 - 0{,}0082 = 0{,}976933$$

als mögliches Toleranzfeld, in dem sich der äquivalente Sichtweitenvergleichsmeßwert bei 10 km Nennwert bewegen darf.
Bezogen auf die MOR-Umrechnung der Transmissionswerte ergeben sich als mögliche Grenzen des Sichtweitenvergleichsmeßwertes:

$$MOR_{+} = \ln 0{,}05 \times 50m/\ln 0{,}991833 = 18{,}2 \text{ km}$$

$$MOR_{-} = \ln 0{,}05 \times 50m/\ln 0{,}976933 = 6{,}42 \text{ km}$$

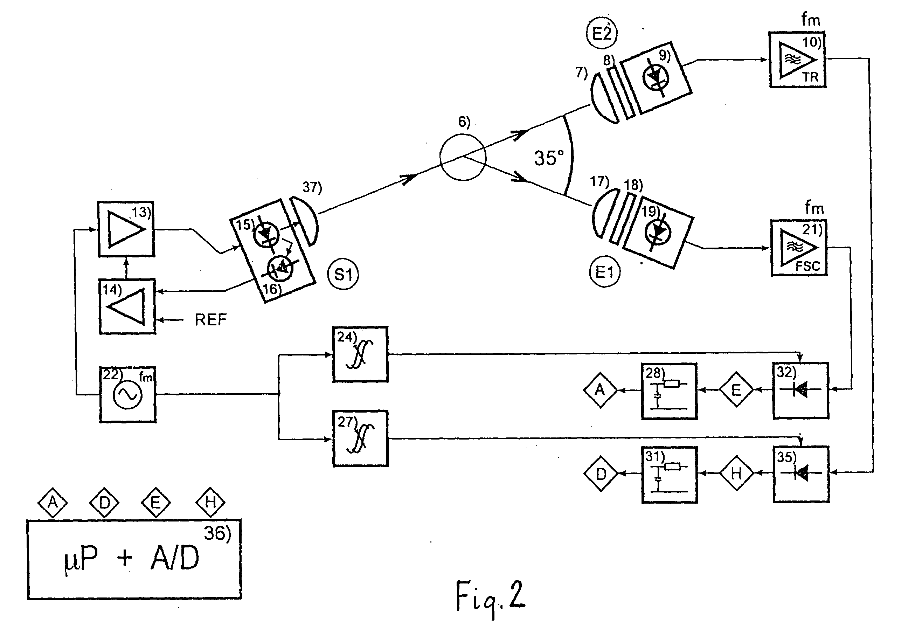

Insbesondere Meßgeräte, die nach dem Vorwärtsstreuprinzip arbeiten, haben bei guten Sichtweiten von z.B. 10 km eine weitaus höhere Meßgenauigkeit. Daher kann bei guter Sichtweite das Signal der Transmissiometer mit dem Meßwert des Streulichtmeßgerätes nachkalibriert werden.
Die Verwendung eines Streulichtmeßgerätes, welches nach dem Rückwärtsstreuprinzip aufgebaut ist, ist möglich. Bevorzugt wird jedoch die Verwendung eines Streulichtmeßgerätes nach dem Vorwärtsstreuprinzip.
Besonders bevorzugt wird die Verwendung eines Streulichtmeßgerätes, welches selbst bereits eine Kompensation der Scheibenverschmutzung aufweist wie z. B. durch Verwendung von wenigstens einem zusätzlichen Empfänger, der dem Sender direkt gegenüber angeordnet ist. Ein derartiges Meßgerät ist in DE 44 01 755.3 beschrieben. Es besteht aus einer Lichtquelle und einem Empfänger in Vorwärtsstreuanordnung sowie wenigstens einem zweiten Empfänger, der in der optischen Achse des Senders zur Bestimmung der Transmission angeordnet ist. Sender und Empfänger sind regelmäßig mit Nebeneinrichtungen zur Erzeugung geeigneter Strahlenbündel und mit Fenstern zur Abschirmung gegen Umwelteinflüsse versehen. Durch Ablagerungen auf den Fenstern entsteht ein Meßfehler, der zu kompensieren ist. Durch die Messung sowohl in Transmissions-als auch in Streulichtanordnung im gleichen Meßvolumen (definiert durch die Aperturen von Lichtsender und Streulichtempfänger) ist es möglich, den Einfluß der Fensterverschmutzung zu kompensieren. Da die zu beobachtenden Vorgänge zeitlich relativ langsam veränderlich sind, können die beiden Empfänger für zeitlich aufeinanderfolgende Teilmessungen der Transmission und der Streuung im wesentlichen mit einer einzigen Auswerteelektronik auskommen, wobei für die Streulichtmessung eine zusätzliche Vorverstärkung vorzusehen ist. Die Empfänger können jedoch auch mit jeweils eigener Auswerteelektronik versehen sein. Unter der Annahme, daß die Fenster der nebeneinanderliegenden Empfänger beide die gleiche Verschmutzung aufweisen und daß die absorbierenden Effekte der Fensterverschmutzung im wesentlichen allein die Transmission der Meßanordnung verfälschen, kann der durch die Fensterverschmutzung bewirkte Meßfehler in der Transmissionsmessung bestimmt werden beziehungsweise es ergibt sich die kompensierte, also von dem Meßfehler befreite Streuamplitude aus dem Verhältnis von gemessener Streuamplitude und gemessener Transmission.
Hierbei kommt es nicht darauf an, die Verschmutzung der einzelnen Scheiben zu bestimmen, sondern die Kompensation der Scheibenverschmutzung für die Streulichtmessung erfolgt automatisch durch die Bildung des Quotienten der beiden oben genannten Meßwerte.
Anhand des in Figur 2 beigefügten Funktionsschemas wird der prinzipielle Aufbau eines kombinierten Sichtweiten- und Niederschlagsmeßgerätes dargestellt. Es bedeuten:

| | |
|---|---|
| 6) | Meßvolumen |
| 7) | Empfängeroptik und Gerätefenster E2 |
| 8) | optischer Schmalbandfilter |
| 9) | Empfängerdiode E2 mit Vorverstärker |
| 10) | Verstärker mit Bandpasscharakteristik für Transmissionsmessung E2, Mittenfrequenz fm |
| 13) | LED-Treiberelektronik S1 |
| 14) | Intensitätsregelung Sender S1 |
| 15) | Sende-LED S1 |
| 16) | Empfängeroptik und Gerätefenster E1 |
| 18) | optischer Schmalbandfilter |
| 19) | Empfängerdiode E1 mit Vorverstärker |
| 21) | Verstärker mit Bandpasscharakteristik für Streulichtmessung E1, Mittenfrequenz fm |
| 22) | Modulationsgenerator, Frequenz fm |
| 24),27) | Phasenkorrektur zur Synchronsignalgenerierung |
| 28) | Mittelwertbilder Streulichtmessung E1 |
| 31) | Mittelwertbilder Transmissionsmessung E2 |
| 32),35) | Synchrondemodulator |
| 36) | Mikroprozessor für Überwachung und Auswertung |
| 37) | Senderoptik und Gerätefenster S1 |

A   Mittelwert Streulichtmessung E1 (Sichtweite)
D   Mittelwert Transmissionsmessung E2 (Kompensation)
E   Momentanwert Streulichtmessung E1 (Niederschlag)

H Momentanwert Transmissionsmessung E2 (Niederschlag)

Die Meßwerte A und D beinhalten den Mittelwert der jeweils gemessenen Streuamplitude beziehungsweise gemessenen Transmission. Die Werte können direkt einem Quotientenbildner zugeführt werden oder über entsprechende Speicher und ein Rechenwerk in einen Quotienten umgerechnet werden (36).

Die errechnete, korrigierte Streuamplitude wird dann unter Berücksichtigung einer gerätetypischen Kalibrierkonstante in einen Sichtweitenwert umgerechnet.

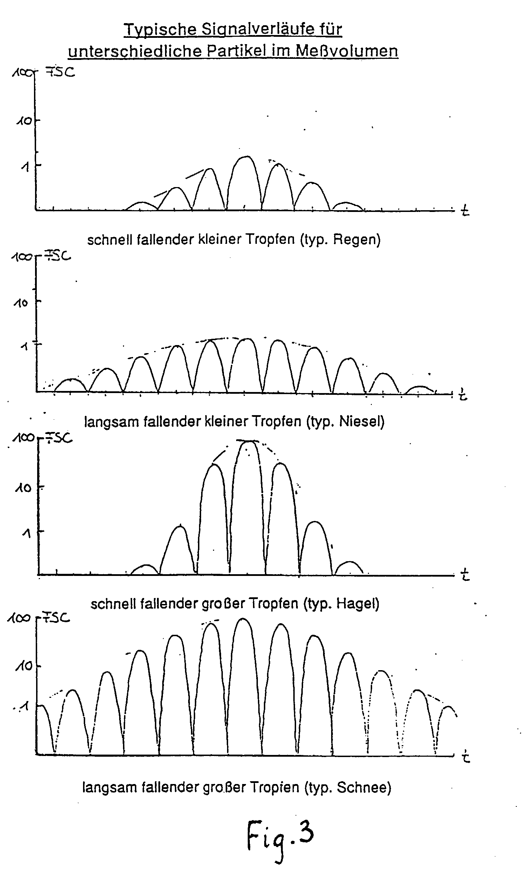

Zur Bestimmung der Niederschlagsart können der zeitliche Verlauf sowie die Amplituden des kompensierten Vorwärtsstreusignales und des Transmissionssignales (Momentanwerte E, H) herangezogen werden. Gemäß der als Figur 3 beigefügten schematischen Darstellung der Streuamplitude (Ordinate in logarithmischem Maßstab) ergeben sich für die einzelnen Niederschlagstypen (Regen, Nieselregen, Hagel, Schnee) typische Signalamplituden und Zeitverläufe. Die einzelnen relativen Maxima in einem Streulicht entstehen durch die Modulation der Lichtquelle (LED, Spannungsverlauf nach Empfänger-Demodulator). Der Niederschlag wird demzufolge nach dem Prinzip eines Stroboskopes bei seiner Durchquerung des Meßvolumens mehrfach beleuchtet. Aus der Anzahl der bei der modulierten Beleuchtung vorwärtsgestreuten Wellenzüge kann auf die Geschwindigkeit des Niederschlages zurückgeschlossen werden. Aus der gleichzeitigen Beobachtung der Transmission kann bei bekannter Geschwindigkeit auf die Größe der den Niederschlag bildenden Tropfen beziehungsweise Partikel zurückgeschlossen werden, da die Gesamttrübung sich aus dem Volumenstrom der im Beobachtungsvolumen vorhandenen Partikel ergibt beziehungsweise bei bekannter Geschwindigkeit auf die einzelnen Volumina zurückgeschlossen werden kann. Damit ist aus der gleichzeitigen Messung von Streuung und Transmission nicht nur die Bestimmung der Art des Niederschlages sondern auch der Niederschlagsmenge möglich. (Für spezielle Anwendungen kann die Geschwindigkeit auch aus der Frequenzverschiebung der gestreuten Strahlung gegenüber der Beleuchtungsfrequenz bestimmt werden.)

Da die Annahme, daß die Verschmutzung bei beiden Empfängern identisch ist, nicht immer zutrifft, wird nach einer besonders bevorzugten Ausführung vorgesehen, einen weiteren Sender anzuordnen. Sender und Empfänger stehen einander dann in einer kreuzförmigen Anordnung gegenüber.

Transmission und Streumessung in den einzelnen Beleuchtungsstrahlengängen beziehungsweise Empfangsstrahlengängen können dann mittels Teilmessungen kompensiert werden.

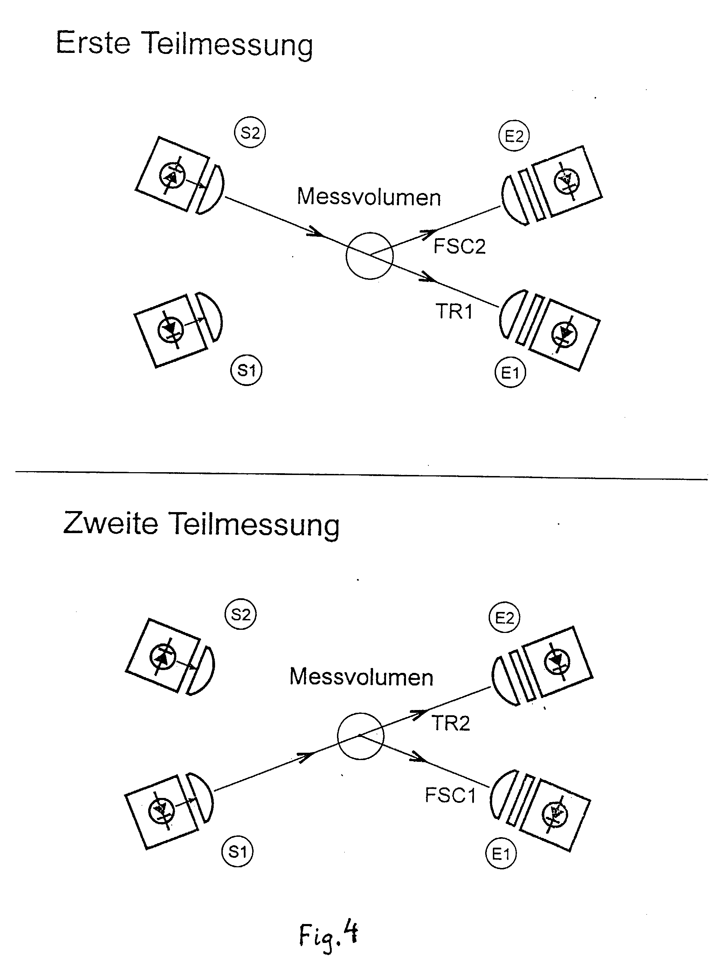

In Figur 4 ist das Kompensationsverfahren schematisch dargestellt.

In einer ersten Teilmessung wird die vom Sender S2 kommende Strahlung sowohl in Transmission- als auch in Streuung von Empfänger E1 beziehungsweise Empfänger E2 gemessen. Das von Empfänger E1 in Transmission registrierte Signal setzt sich zusammen aus der Intensität des Senders S2 und der Absorption beziehungsweise Transmission durch die Optik des Senders S2 und des Empfängers E1. In der Streumessung wird die gemessene Vorwärtsstreuung durch die Streuamplitude im Meßvolumen 6 und die Absorption (beziehungsweise Transmission) durch die Optik des Senders S2 und des Empfängers E2 bestimmt.

In der zweiten Teilmessung werden die entsprechenden Signale in umgekehrter Anordnung ermittelt. Für normierte Signale aus den einzelnen Teilmessungen der Transmission und der Streuamplitude ergibt sich das korrigierte Signal zu

$$FSC = \sqrt{\frac{FSC1 \times FSC2}{TR1 \times TR2}}$$

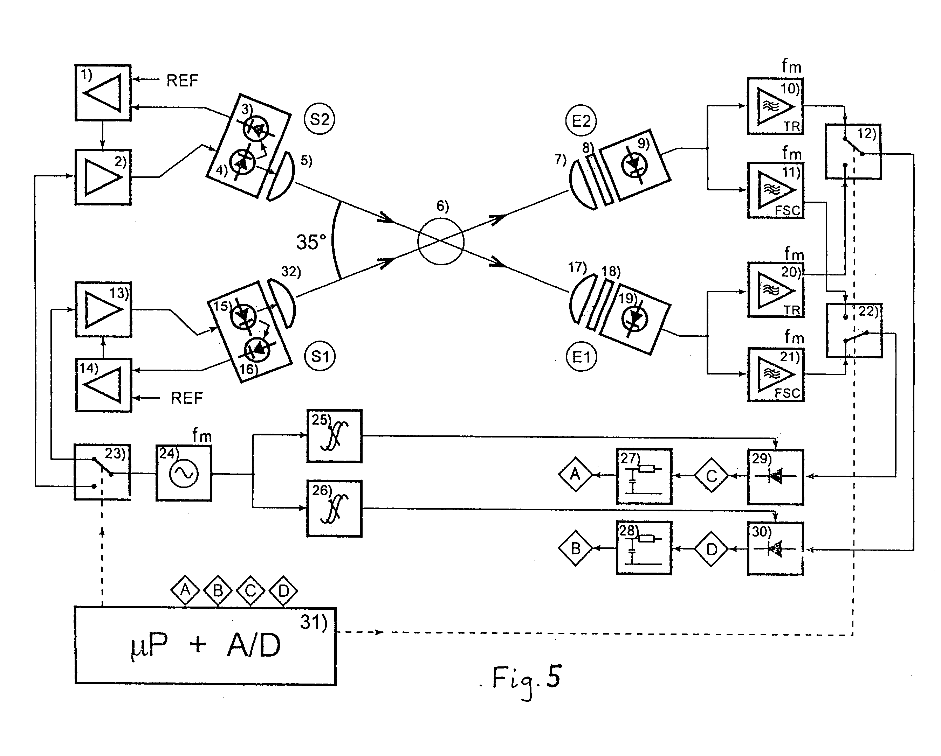

Die Teilmessungen können zeitlich aufeinanderfolgend durchgeführt werden. Der entsprechende Aufbau ist in der schematischen Darstellung in Figur 5 wiedergegeben. Im einzelnen bedeuten:

1) Intensitätsregelung Sender S2
2) LED-Treiberelektronik
3) Referenzphotodiode zur Intensitätsregelung
4) Sende-LED S2
5) Senderoptik und Gerätefenster S2
6) Meßvolumen
7) Empfängeroptik und Gerätefenster E2
8) optischer Schmalbandfilter
9) Empfängerdiode E2 mit Vorverstärker
10) Verstärker mit Bandpasscharakteristik für Transmissionsmessung E2, Mittenfrequenz fm
11) Verstärker mit Bandpasscharakteristik für Streulichtmessung E2, Mittenfrequenz fm
12) Umschalter Transmissionsmessung
13) LED-Treiberelektronik S1
14) Intensitätsregelung Sender S1
15) Sende-LED S1
16) Referenzphotodiode zur Intensitätsregelung
17) Empfängeroptik und Gerätefenster E1
18) optischer Schmalbandfilter
19) Empfängerdiode E1 mit Vorverstärker
20) Verstärker mit Bandpasscharakteristik für Transmissionsmessung E1, Mittenfrequenz fm
21) Verstärker mit Bandpasscharakteristik für Streulichtmessung E2, Mittenfrequenz fm
22) Umschalter Streulichtmessung E1/E2
23) Umschalter Sender S1/Sender S2
24) Modulationsgenerator

25),26)  Phasenkorrektur zur Synchronsignalgenerierung
27)  Mittelwertbilder Streulichtmessung
28)  Mittelwertbilder Transmissionsmessung
29),30)  Synchrondemodulator
31)  Mikroprozessor mit Analog-/Digital-Wandlung für Steuerung und Auswertung
32)  Senderoptik und Gerätefenster S1

A  Mittelwert Streulichtmessung (Sichtweite)
B  Mittelwert Transmissionsmessung (Kompensation)
C  Momentanwert Streulichtmessung (Niederschlag)
D  Momentanwert Transmissionsmessung (Niederschlag)

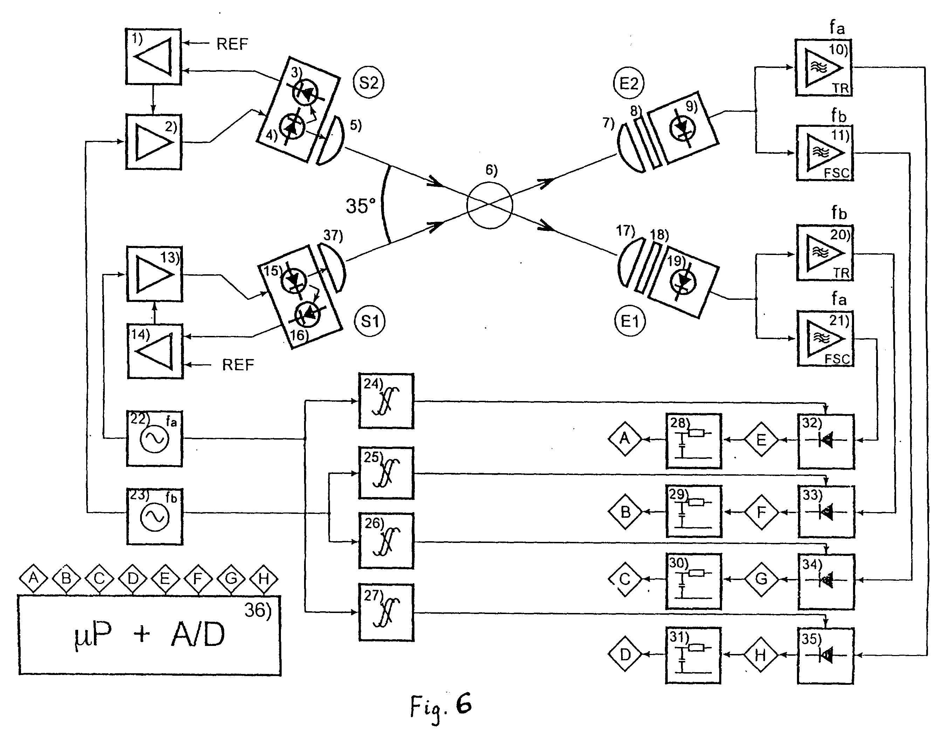

In einem schematisch in Figur 6 dargestellten Aufbau ist aber auch die gleichzeitige Durchführung von erster und zweiter Teilmessung möglich, wenn Sender 1 und Sender 2 mit unterschiedlichen Modulationsfrequenzen (fa, fb) betrieben werden und in den Empfängern entsprechende, auf die jeweilige Modulationsfrequenz abgestimmte Auswerteeinrichtungen (32 bis 35) angeordnet sind. Je nach Güte und Trennschärfe der Empfängerverstärker müssen die Modulationsfrequenzen einen ausreichenden Abstand aufweisen.
Im einzelnen bedeuten:

1)  Intensitätsregelung Sender S2
2)  LED-Treiberelektronik
3)  Referenzphotodiode zur Intensitätsregelung
4)  Sende-LED S2
5)  Senderoptik und Gerätefenster S2
6)  Meßvolumen
7)  Empfängeroptik und Gerätefenster E2
8)  optischer Schmalbandfilter
9)  Empfängerdiode E2 mit Vorverstärker
10)  Verstärker mit Bandpasscharakteristik für Transmissionsmessung E2, Mittenfrequenz fm
11)  Verstärker mit Bandpasscharakteristik für Streulichtmessung E2, Mittenfrequenz fm
13)  LED-Treiberelektronik S1
14)  Intensitätsregelung Sender S1
15)  Sende-LED S1
16)  Referenzphotodiode zur Intensitätsregelung
17)  Empfängeroptik und Gerätefenster E1
18)  optischer Schmalbandfilter
19)  Empfängerdiode E1 mit Vorverstärker
20)  Verstärker mit Bandpasscharakteristik für Transmissionsmessung E1, Mittenfrequenz fm
21)  Verstärker mit Bandpasscharakteristik für Streulichtmessung E1, Mittenfrequenz fm
22)  Modulationsgenerator, Frequenz fa
23)  Modulationsgenerator, Frequenz fb
24),25)  Phasenkorrektur zur Synchronsignalgene

rierung 26),27)
28)  Mittelwertbilder Streulichtmessung E1
29)  Mittelwertbilder Transmissionsmessung E1
30)  Mittelwertbilder Streulichtmessung E2
31)  Mittelwertbilder Transmissionsmessung E2
32),33)  Synchrondemodulator
34),35)  Synchrondemodulator
36)  Mikroprozessor für Überwachung und Auswertung
37)  Senderoptik und Gerätefenster S1
A  Mittelwert Streulichtmessung E1 (Sichtweite)
B  Mittelwert Transmissionsmessung E1 (Kompensation)
C  Mittelwert Streulichtmessung E2 (Sichtweite)
D  Mittelwert Transmissionsmessung E2 (Kompensation)
E  Momentanwert Streulichtmessung E1 (Niederschlag)
F  Momentanwert Transmissionsmessung E1 (Niederschlag)
G  Momentanwert Streulichtmessung E2 (Niederschlag)
H  Momentanwert Transmissionsmessung E2 (Niederschlag)

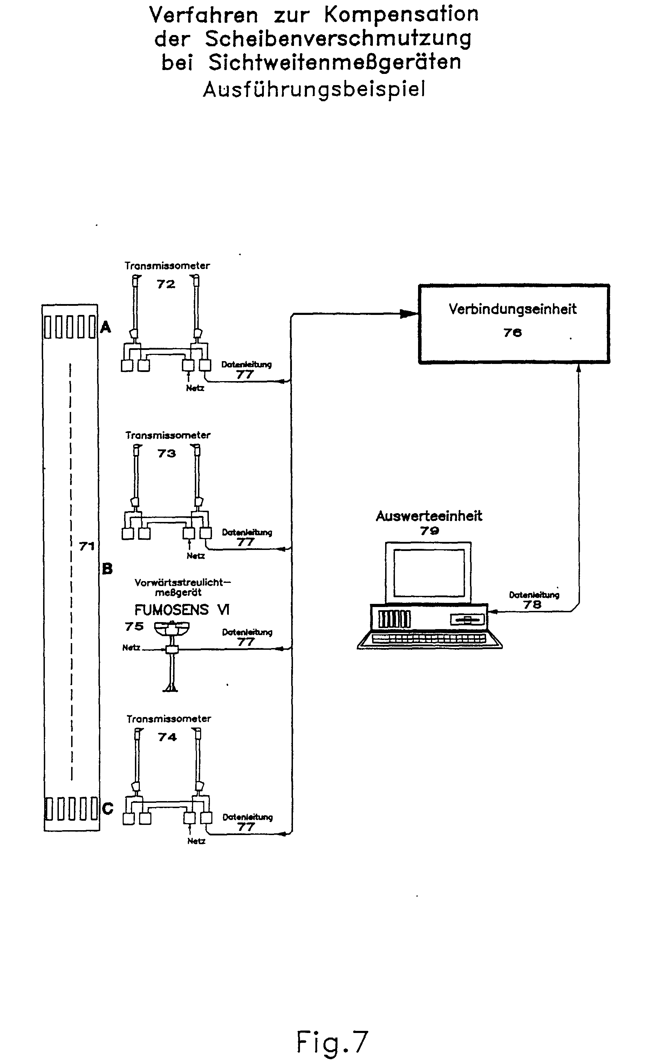

Anhand des in Figur 7 dargestellten Ausführungsbeispieles wird das Verfahren zur Kompensation der Scheibenverschmutzung bei Sichtweitenmeßgeräten beschrieben.
An der Runway 71 sind mehrere Transmissiometer 72, 73, 74 angeordnet. Diese sowie das Vorwärtsstreumeßgerät 75 sind an eine Verbindungseinheit 76 mit Leitungen 77 angeschlossen. Die Verbindungseinheit 76 ist über eine Leitung 78 mit einer Auswerteeinheit 79 verbunden. Sobald das Vorwärtsstreumeßgerät gute Sichtbedingungen anzeigt (z.B. 10 km), wird dieser MOR-Wert wie oben in Gleichung (3) eingesetzt. Hieraus ergibt sich ein Transmissionswert von z. B. 98,5% bei einer Sichtweite von 10 km. Dieser Transmissionswert wird bei den Transmissiometern als Sollwert eingestellt und zur Bildung eines Korrekturfaktors der Transmissionsanzeige verwendet.
Insbesondere wird der aus der Streulichtmessung berechnete Transmissionswert ins Verhältnis zu dem von einem oder mehreren Transmissiometern angezeigten Transmissionswert gesetzt. Dieses Verhältnis stellt dann einen Korrekturfaktor dar, der am Meßbereichsende des Transmissiometers (von z.B. 2000 m) einen Meßfehler von weniger als 10% bewirkt. Hieraus folgt, daß bei schlechten Sichtbedingungen, bei denen die Transmissiometer typischerweise eine bessere Meßgenauigkeit aufvveisen, als die Streulichtmeßgeräte nach Abb. 1 ein noch deutlich verringerter Meßfehler.
Der so bestimmte Korrekturfaktor wird bis zum Auftreten einer erneuten guten Sichtbedingung mit der aktuellen Anzeige der Transmissiometer multipliziert. Bei erneut guter Sichtbedingung kann dann automatisch ein neuer Korrekturfaktor bestimmt werden. Hierdurch ergeben sich auch langfristig deutlich verringerte Wartungsintervalle. Außerdem läßt sich an dem reziproken Wert des so bestimmten Korrekturfaktors ablesen, wie groß der für die Transmissionsmessung noch nutzbare Dynamikbereich ist. Hiernach kann gezielt die Wartungsarbeit (im allgemeinen Scheibenreinigung) geplant werden. Außerdem ergibt sich die Möglichkeit, bei Wartung an einzelnen Transmissiometern, z.B. nach Austausch eines Senders, mittels der, von dem Streulichtmeßgerät gemessenen Sichtweite eine Grobkalibrierung einzelner oder aller Transmissiometer vorzunehmen. Die präzise Nachkalibrierung erfolgt anschließend automatisch in der nächstmöglichen Wettersituation.

Schließlich kann bei gereinigten Scheiben ein Abgleich des Korrekturfaktors erfolgen.

Weitere Vorteile der Kombination von Transmissiometern und Streulichtmeßgeräten sind, daß zusätzlich Sichtweitenmeßwerte von oberhalb zwei Kilometern durch das Streulichtmeßgerät zur Verfügung stehen sowie daß mit dem Streulichtmeßgerät zusätzlich verläßliche Meßdaten über Niederschlagstyp und -akkumulation vorliegen.

Soweit bisher nur die Scheibenverschmutzung genannt war, ist dies lediglich als ein Beispiel für Einflüsse zu verstehen, die insgesamt die Messung des Transmissiometers verfälschen. Zu derartigen Einflüssen gehören zum Beispiel auch:

- unzureichende Kalibrierung, z.B. durch Nachkalibrierungen nach Geräteeingriffen bei ungünstigen Sicht- und Witterungsverhältnissen;
- die Langzeitstabilität der Ausrichtung von Sender- und Empfängereinheit zueinander (Stabilität der Betonsockel, Stabilität des Untergrundes/Bodenbewegungen, allgemeine mechanische Langzeitstabilität der ausrichtungsrelevanten Geräteteile);
- Langzeitstabilität der verwendeten Sender- und Empfängeroptik bzw. -elektronik (Alterung der Lichtquelle, Langzeitdrift von Lichtintensität, Lichtverteilung oder Empfängerempfindlichkeit)

Derartige Einflüsse lassen sich mit dem vorgeschlagenen Verfahren korrigieren.

## Patentansprüche

1. Verfahren zur Kompensation der Scheibenverschmutzung bei Transmissiometern zur Sichtweitenmessung, dadurch gekennzeichnet, daß bei Sichtweiten größer als 10 km aus einer Streulichtmessung mit einem Streulichtmeßgerät die Transmission berechnet wird und dieser Wert zur Kalibrierung des Transmissiometers als Soll-Wert der Transmissionsmessung eingestellt wird.

2. Verfahren zur Kompensation nach Anspruch 1, dadurch gekennzeichnet, daß zur Bildung eines Korrekturfaktors die von dem Streulichtmeßgerät abgeleitete Transmission ins Verhältnis zu der von dem Transmissiometer angezeigten Transmission gesetzt wird.

3. Verfahren zur Kompensation nach Anspruch 2, dadurch gekennzeichnet, daß die Transmissiometermeßwerte mit dem bestimmten Korrekturfaktor multipliziert werden.

## Claims

1. A process to compensate for lens contamination in transmissiometers for optical range measurement, characterized by the fact that, with optical ranges larger than 10 km, the transmission is calculated from a scatter light measurement performed with a scatter light measurement device, and this value is established as the measured transmission value for calibration of the transmissiometer.

2. A compensation process as in Claim 1, characterized by the fact that to form a correction factor, the transmission derived by the scatter light measurement device is placed in relationship to the transmission displayed by the transmissiometer.

3. A compensation process as in Claim 2, characterized by the fact that the transmissiometer measurement values are multiplied by the determined correction factor.

## Revendications

1. Procédé de compensation de l'encrassement des vitres de transmissiomètres pour la mesure de la visibilité, caractérisé en ce que dans le cas de visibilités supérieures à 10 km, la transmission est calculée à partir d'une mesure de la lumière dispersée, au moyen d'un appareil de mesure de lumière dispersée et cette valeur est réglée en tant que valeur de consigne de la mesure de transmission pour calibrer le transmissiomètre.

2. Procédé de compensation selon la revendication 1, caractérisé en ce que pour former un facteur de correction, la transmission dérivée de l'appareil de mesure de lumière dispersée est mise en rapport avec la transmission indiquée par le transmissiomètre.

3. Procédé de compensation selon la revendication 2, caractérisé en ce que les valeurs mesurées par le transmissiomètre sont multipliées par le facteur de correction déterminé.

Relativer Sichtweitenmeßfehler ΔMOR/MOR für unterschiedliche
Scheibenverschmutzungen bei Transmissionsmeßgeräten :

Fig. 1

Fig.2

**Typische Signalverläufe für unterschiedliche Partikel im Meßvolumen**

schnell fallender kleiner Tropfen (typ. Regen)

langsam fallender kleiner Tropfen (typ. Niesel)

schnell fallender großer Tropfen (typ. Hagel)

langsam fallender großer Tropfen (typ. Schnee)

Fig.3

# Erste Teilmessung

# Zweite Teilmessung

Fig. 4

Fig. 5

EP 0 745 839 B1

Fig. 6

μP + A/D

## Verfahren zur Kompensation
## der Scheibenverschmutzung
## bei Sichtweitenmeßgeräten
### Ausführungsbeispiel

Fig.7